# EUROPÄISCHE PATENTSCHRIFT

(11) **EP 0 399 237 B1**
(45) Veröffentlichungstag und Bekanntmachung des Hinweises auf die Patenterteilung: **05.01.1994**
(21) Anmeldenummer: 90107950.9
(22) Anmeldetag: 26.04.1990
(51) Int. Cl.: A61C 3/16

(54) **Instrument zum Entfernen von Zahnersatz**
Dental appliance removal device
Appareil pour le descellement des éléments prothétiques

(30) Priorität: 23.05.1989 DE 3916680
(43) Veröffentlichungstag der Anmeldung: 28.11.1990
(73) Patentinhaber: Romer, Hans, D-88400 Biberach (DE)
(72) Erfinder: Romer, Hans, D-88400 Biberach (DE)
(74) Vertreter: KOHLER SCHMID + PARTNER

(56) Entgegenhaltungen:
- DE-A- 3 330 572
- FR-A- 2 522 494
- FR-A- 2 628 313

## Beschreibung

Die Erfindung geht aus von einem Instrument zum Entfernen von mit dem Zahnstumpf verbundenem Zahnersatz, mit einem Griff und einem an einem Ende des Griffes angeformten Verlängerungsstück, das ein Endstück aufweist, das im Anwendungsfall in einen Durchbruch eines Zahnersatzes eingefügt ist, wobei das Endstück eine am Zahnstumpf abstützbare Kante und einen Flächenabschnitt aufweist, der im Bereich des Durchbruches an Flächen des Zahnersatzes zur Anlage bringbar ist.

Ein derartiges Instrument ist durch die DE-A-33 30 572 sowie FR-A-25 22 494 bekanntgeworden.

Der aus der FR-A-2.522.494 bekannte Kronenaufbiegemeißel ermöglicht ein bequemes Aufbiegen der Kronen. Ferner werden zum Aufbiegen der Kronen nicht mehr unterschiedlich ausgeformte Instrumente benötigt.

Mit dem bekannten Kronenaufbiegemeißel können Kronen gut aufgebogen werden, sofern sie mindestens über zwei Flächen vorher aufgetrennt wurden. In Bezug auf die Vorbearbeitung einer Krone, d.h. um sie vom Zahnstumpf abziehen zu können, bringt der bekannte Kronenaufbiegemeißel keine Verbesserungen. Die Krone muß auch für den Einsatz des bekannten Kronenaufbiegemeißels weit geschlitzt werden. Dies ist nicht nur zeitaufwendig, sondern häufig wird dabei auch der für den Arbeitsvorgang verwendete Bohrer, meist Diamantbohrer, beschädigt. Bedeutender ist aber noch, daß durch die Auftrennung und Aufbiegung, die Krone vielfach so stark beschädigt wird, daß sie nicht mehr wiederverwendet werden kann. Zudem ist der Aufwand, die gelegten Schlitze wieder so zu verlöten, daß der Kronenoberfläche der Trennvorgang nicht anzusehen ist, groß und zeitaufwendig.

Der aus der FR-A-25 22 494 bekanntgewordene Kronenheber besteht aus einem Griff, an den sich ein Verlängerungsschaft anschließt und der in ein sich verjüngendes Ende übergeht. Das Ende ist gegenüber dem Verlängerungsschaft abgewinkelt. Der Verlängerungsschaft ist wie das Ende im wesentlichen im Querschnitt kreisförmig. Soll mittels des bekannten Kronenhebers eine Krone oder ein Stiftzahn von einem Zahnstumpf abgehoben werden, so ist die Krone zwischen Okklusionsfläche und Zahnstumpfplateau anzubohren. In die geschaffene Öffnung kann der bekannte Kronenheber eingeführt werden und indem der Griff des Kronenhebers verdreht wird, kann über eine Schwenkbewegung die Krone bzw. der Stiftzahn vom Zahnstumpf gelöst werden. Von Gegenstand der FR-A-2.522.494 wird in dem Patentansprüchen ausgegangen.

Mit dem bekannten Kronenheber können auf den Zahnersatz nur aus Drehbewegungen resultierende Verschwenkbewegungen übertragen werden. Dabei kann der zu lösende Zahnersatz im Bereich des Durchbruchs stark deformiert werden. Ferner ist der bekannte Kronenheber für ein Abheben des Zahnersatzes im Schneidezahnbereich ungeeignet.

Der Erfindung liegt daher die Aufgabe zugrunde, ein Instrument der eingangs genannten Art dahingehend weiterzubilden, daß zu entfernender Zahnersatz mit nur geringsten Beschädigungen vom Zahnstumpf oder den Zahnstümpfen schnell und einfach gelöst werden kann.

Diese Aufgabe wird erfindungsgemäß dadurch gelöst daß das Endstück als rechteckförmige Platte ausgebildet ist, und bevorzugt sich zum Verlängerungsstück hin verjüngt. Weiterhin wird die Aufgabe auch dadurch gelöst, daß das Endstück mondsichelförmig ausgebildet ist.

Im Backenzahnbereich wird das Instrument zum Lösen des Zahnersatzes so eingesetzt, daß es im Bereich des Durchbruches nahezu drehmomentenfrei gedreht werden kann, und daß es im Bereich eines Zahnstumpfplateaus, der Auflagefläche, durch die Drehbewegung des Instrumentes Normalkräfte auf die zur Okklusionsfläche diametralen Fläche übertragen kann.

Im Schneidezahnbereich wird das erfindungsgemäße Instrument in eine Bohrung eingeführt, die an der Zahnstumpfseitenfläche endet und zum Lösen des Zahnersatzes muß ein Ende des Instruments mit der Spitze am Zahnstumpf zur Anlage gebracht werden.

Weiterhin wird die Aufgabe auch dadurch gelöst, daß das Endstück eine am Zahnstumpf abstützbare Kante und einen Flächenabschnitt aufweist, der im Bereich des Durchbruchs an Flächen des Zahnersatzes zur Anlage bringbar ist.

Das erfindungsgemäße Instrument hat damit den wesentlichen Vorteil, daß der abzunehmende Zahnersatz, z. B. eine Krone, nicht mehr mit langen Schlitzen versehen werden muß. Eine Bohrung mit einem vorzugsweise ovalen Querschnitt ist ausreichend, um mit geeigneten Instrumenten die Krone vom sie haltenden Zahnstumpf abzulösen. Die Bohrung hat einen kleinen freien Querschnitt, d.h. sie ist schnell anzubringen und der dabei verwendete Bohrer wird nur geringen Belastungen ausgesetzt. Bohrer, die für diesen Bohrvorgang verwendet werden, haben eine längere Lebensdauer, können für eine Vielzahl von Bohrungen an Kronen eingesetzt werden, während derselbe Bohrer schon beim Aufschlitzen einer Krone nach dem Stand der Technik so stark beschädigt werden kann, daß er für weitere Verwendungen unbrauchbar ist.

Ein weiterer Vorteil ist, daß eine abzuhebende Krone nicht mehr verformt werden muß. Bis auf die Bohrung bleibt die ursprüngliche Form der Krone auch dann erhalten, wenn sie vom Zahnstumpf abgezogen wird. Dies ermöglicht in hohem Maße eine Wiederverwendung der Krone. Es werden Kosten eingespart. Der mit der abgezogenen Krone sich beschäftigende Zahntechniker muß bei der Krone, die mittels des erfindungsgemäßen Instruments vom Zahnstumpf entfernt wurde, nur die gelegte Bohrung wiederverlöten. Ein Zurückbiegen von Kronenseitenhälften in die ursprüngliche Zahnkronenform entfällt. Das unter großem Zeitaufwand erfolgende Zulöten der sich lang erstreckenden Schlitze bei Kronen, die in der bekannten Weise vom Zahnstumpf abgehoben wurden, ist nicht mehr notwendig.

Ist die Bohrung bevorzugt als Bohrung mit einem ovalen Querschnitt ausgeführt, so hat dies den Vorteil, daß Endstückformen in die Bohrung eingeführt werden können, die bei Dreh- und Schwenkbewegungen des Instruments ein großes Drehmoment auf die abzuhebende Krone übertragen können. Auch die Krone eines dritten Molares läßt sich damit schnell vom Zahnstumpf lösen. Je nach Haftung der Krone am Zahnstumpf kann die Bohrung mit einem Bohrer noch aufgeweitet werden, damit eine größere Endstückform zwischen Krone und Zahnstumpf eingeführt werden kann.

Dabei ist es möglich, daß die Bohrung eine palatinale oder linguale Bohröffnung ist. Dies hat den Vorteil, daß die Krone zum Abheben vom Zahnstumpf bukal, vestibulär nicht bearbeitet werden muß. Nach außen gerichtete Kronenflächen, die sichtbar sein können, müssen nicht angebohrt werden, um die Krone vom Zahnstumpf lösen zu können. Sollten beim Verlöten der Bohrung nicht zu überdeckende Schattierungen zurückbleiben, so sind diese, solange sie nur auf der Zahninnenseite auftreten, bei einer Wiederverwendung dieser Krone nicht von Bedeutung.

Die Bohrung verläuft im Backenzahnbereich zwischen der Okklusionsfläche des Zahnersatzes und dem Zahnstumpf. Bei Prämolaren und Molaren werden große Auflageflächen geschaffen, die dem Endstück des Instruments, mit dem die Krone vom Zahnstumpf gelöst werden soll, als Auflage dient. Eine derartige Bohrung ist einfach zu legen, da der Zahnarzt am Kraftaufwand, mit dem er den Bohrer an die Zahnersatzoberfläche zu drücken hat, sofort erkennen kann, ob er noch den Kronenmantel durchbohrt, oder ob sich die Bohrerspitze schon im Bereich des Zahnstumpfes befindet.

Im Bereich der Schneidezähne endet die Bohrung an der Zahnstumpfseitenfläche.

Dies hat den Vorteil, daß auch Kronen von Zahnstümpfen der Schneidezähne leicht gelöst werden können. Der Zahnstumpf dient der Stirnfläche oder Spitze des Endstückes des Instruments als Widerlager, und mittels einer Schwenkbewegung des Instruments kann auf die Krone eine Kraft in Richtung Zahnachse bewirkt werden. Die Bohrung ist auf der Zahnkronenseiteninnenfläche so anzubringen, daß die Spitze eines Instruments zum Lockern der Krone leicht in die Bohrung einzuführen ist und am Zahnstumpf unverrückbar zur Anlage gebracht werden kann.

Die Bohrung weist bevorzugt eine Breite von b = 4 mm, eine Höhe von h = 2 mm und eine Tiefe, je nach Größe des Zahnersatzes, von t = 2 mm bis t = 6 mm auf.

Dies hat den Vorteil, daß mittels eines verhältnismäßig kleinen Durchbruchs an der Krone, die Zahnkrone vom Zahnstumpf abgelöst werden kann. Der in seinen Abmessungen angegebene Bohrungsquerschnitt und Bohrlochtiefe ist ausreichend, um die Zahnkrone mit erfindungsgemäßen Instrumenten vom Zahnstumpf abzuheben.

In einer bevorzugten Ausgestaltung der Erfindung ist das Endstück mondsichelförmig ausgebildet.

Dies hat den Vorteil, daß über Schwenkbewegungen des Kronenhebers ein Kraftschluß an Schneidezähnen erreicht werden kann, der dazu ausreicht, Zahnkronen auch von Zahnstümpfen der Schneidezähne abzulösen.

In weiterer Ausgestaltung der Erfindung geht das Endstück in einen Abschnitt des Verlängerungsstückes über, der gegenüber dem übrigen Verlängerungsstück und dem Griff abgewinkelt ist.

Dies hat den Vorteil, daß der erfindungsgemäße Kronenheber auch dann eingesetzt werden kann und mit ihm ausreichende Hebelkräfte erzeugt werden können, wenn die Bohrung über die Mundöffnung nicht direkt für das Instrument zugänglich ist.

Das erfindungsgemäße Instrument entspricht damit allen erweiterten Anforderungen, die im Bereich der Zahnprothetik gestellt werden. Die Bohrung an der Krone ist schnell und einfach zu legen, die Zahnkrone wird dabei nur geringfügig beschädigt und erfährt auch keine Verformungen. Die Bohrung läßt sich mit wenig Aufwand wieder so verschließen, daß sie nicht mehr erkennbar ist. Die entfernte Krone kann als vollwertige neue Krone wiederverwertet werden.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigen:
- Fig. 1: einen Backenzahn mit einer auf zwei Seiten aufgeschlitzten Krone nach einem bekannten Verfahren;
- Fig. 2: einen Gebißabschnitt mit Bohrungsöffnungen;
- Fig. 3: einen Backenzahn mit Zahnkrone und Bohrung;
- Fig. 4: einen Zahnstumpf gemäß Fig. 3, mit einem erfindungsgemäßen Kronenheber, dessen Endstück auf dem Zahnstumpf aufliegt;
- Fig. 5: einen Schneidezahn mit einer Zahnkrone im Schnitt und einem erfindungsgemäßen Kronenheber;
- Fig. 6: einen erfindungsgemäßen Kronenheber;
- Fig. 7: eine weitere Ausführungsform eines erfindungsgemäßen Kronenhebers;
- Fig. 8: die Form einer Krone nach dem Abheben von einem Zahnstumpf durch einen erfindungsgemäßen Kronenheber.

Die einzelnen Figuren der Zeichnung zeigen den erfindungsgemäßen Gegenstand teilweise stark schematisiert und sind nicht maßstäblich zu verstehen. Die Gegenstände der einzelnen Figuren sind teilweise im Verhältnis zueinander stark vergrößert dargestellt, damit ihr Aufbau besser gezeigt werden kann.

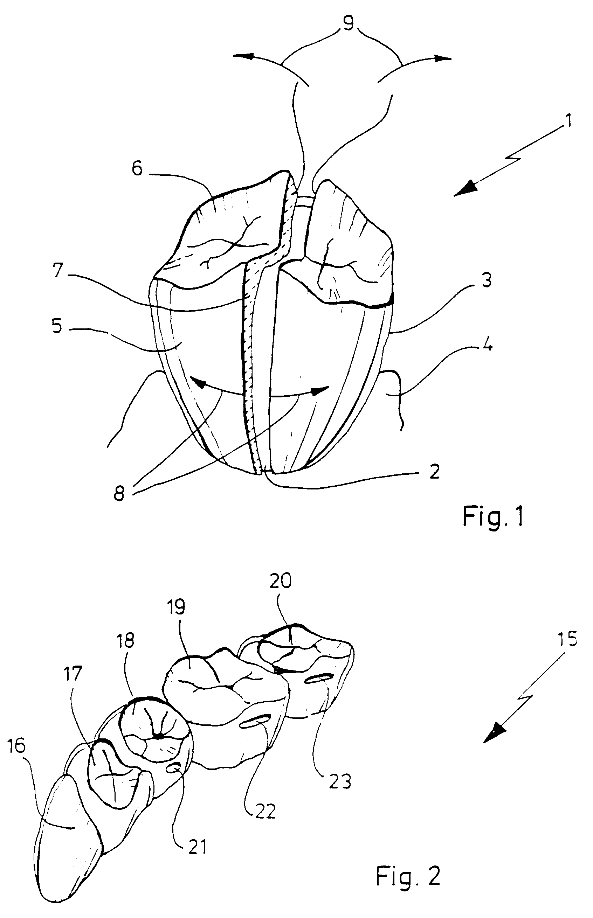

In Fig. 1 ist mit 1 ein Backenzahn gezeigt, dessen Zahnstumpf 2 eine Krone 3 trägt. Der Kronenrand ist von Zahnfleisch 4 umgeben. Eine Seitenfläche 5, palatinal oder lingual, und eine Okklusionsfläche ist mit einem Schlitz 7 versehen. Der Schlitz 7 wird in bekannter Weise mit einem entsprechenden Fräser ausgeführt. Die Krone wird im Bereich des Schlitzes 7 bis auf den Zahnstumpf 2 durchtrennt. Soll die Krone 3 vom Zahnstumpf 2 abgenommen werden, so wird mit entsprechenden bekannten Instrumenten der Schlitz 7 in Pfeilrichtung 8 und 9 aufgeweitet, so daß sich die Krone von dem Zahnstumpf 2 löst. Die Krone 3 wird bei diesem Vorgang so stark verformt, daß sie nur noch lose auf dem Zahnstumpf 2 aufliegt und mittels einer Zange von dem Zahnstumpf 2 abgenommen werden kann.

Fig. 2 zeigt einen Gebißabschnitt 15 mit einem Eckzahn 16, einem ersten Prämolar 17, einem zweiten Prämolar 18, einem ersten Molar 19 und einem zweiten Molar 20. Der zweite Prämolar 18 und die Molaren 19, 20 tragen jeweils eine Krone, die mit einer Bohröffnung 21, 22, 23 versehen ist. Der Querschnitt der Bohrungsöffnung 21, 22, 23 ist in der Fig. 2 kreisförmig bis oval. Die Bohrlöcher der Bohrungsöffnungen 21, 22, 23 verlaufen unterhalb der Okklusionsfläche und enden auf dem Zahnstumpfplateau.

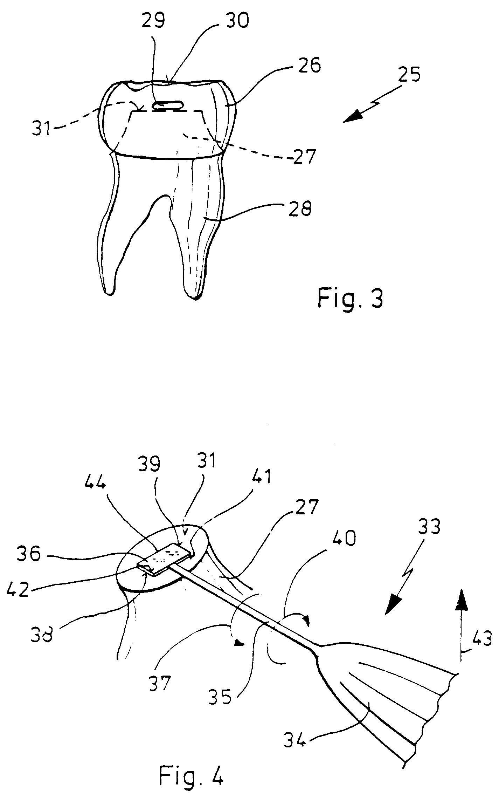

Fig. 3 zeigt einen Backenzahn 25, mit einer Krone 26 auf einem Zahnstumpf 27. Von dem Backenzahn 25 ist auch die Wurzel 28 in der Figur dargestellt. Der Zahnstumpf 27 ist in gestrichelten Linien in der Figur eingezeichnet. Die Krone 26 ist mit einer Bohrung 29 versehen, die eine Kronenseitenwand durchbricht und einen ovalen Querschnitt aufweist. Die Bohrung 29 ist unterhalb der Okklusionsfläche 30 angelegt und verläuft dicht über einer Auflagefläche 31 des Zahnstumpfes 27. Die Bohrung 29 verläuft von der Zahninnenseite aus und endet ungefähr mittig auf der Auflagefläche 31 des Zahnstumpfes 27. Im Querschnitt ist die Bohrung 29 so bemessen, daß ein entsprechendes Instrument zum Abheben der Krone 26 von dem Zahnstumpf 27 in die Bohrung 29 eingeführt werden kann.

Fig. 4 zeigt den Zahnstumpf 27 gemäß Fig. 3. Zur Verdeutlichung ist auf die Darstellung der Krone, die den Zahnstumpf umgibt, verzichtet worden. Auf der Auflagefläche 31 liegt ein Kronenheber 33, der aus einem Griff 34 und einem Verlängerungsstück 35 und einer Platte 36, mit der Platte 36 auf.

Wird der Kronenheber 33 in Pfeilrichtung 37 gedreht, so kommt eine erste untere Kante 38 der Platte 36 auf der Auflagefläche 31 zur Anlage. Die erste untere Kante 38 bildet ein Auflager. Eine zweite obere Kante 39 der Platte 36 wird bei der Drehbewegung in der Pfeilrichtung 37 gegen die Innenwandung, der zur Okklusionsfläche diametralen Fläche, der Krone gedrückt. Über die an der Krone nunmehr wirkende Kraft, wird versucht, die Krone von dem Zahnstumpf 27 zu lösen. Wird der Kronenheber 33 in Pfeilrichtung 40 gedreht, so liegt die Platte 36 mit einer zweiten unteren Kante 41 auf der Auflagefläche 31 auf und eine erste obere Kante 42 drückt gegen die Krone. Über die erste obere Kante 42 wirkt eine Kraft auf die Krone, mittels der die Krone von dem Zahnstumpf 27 gelöst werden kann. Wird der Kronenheber 33 in Pfeilrichtung 43 verschwenkt, so bildet eine dritte Kante 44 das Auflager auf der Auflagefläche 31. Abschnitte des Verlängerungsstücks 35 und Abschnitte der Platte 36 kommen an der Krone zur Anlage und drücken die Krone von dem Zahnstumpf 27 weg.

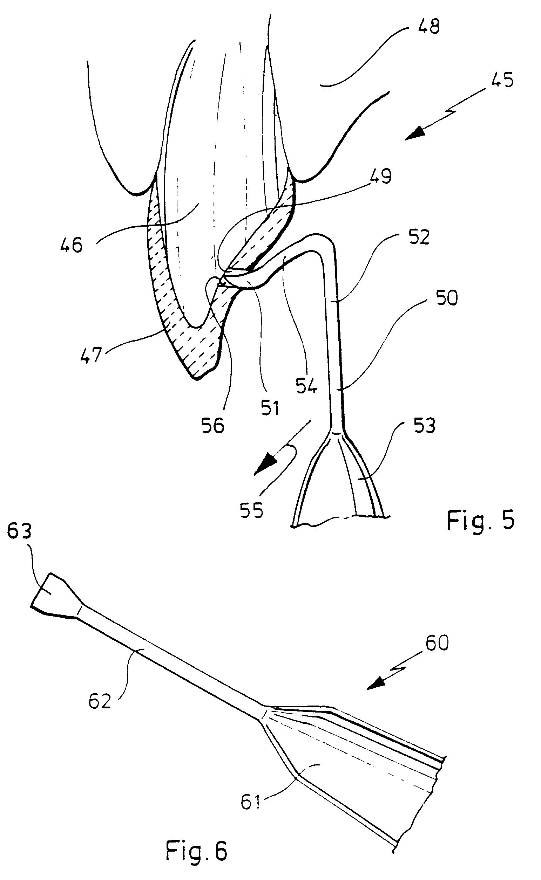

Fig. 5 zeigt einen Schneidezahn 45 mit einem Zahnstumpf 46 und einer Krone 47, die im Schnitt dargestellt ist. Der Zahnstumpf ist im Bereich des Kronenrandes vom Zahnfleisch 48 umgeben. Auf der Innenseite der Krone 47 ist palatinal oder lingual eine Bohrung 49 angebracht, die von der Innenoberfläche der Krone 47 bis zur Oberfläche des Zahnstumpfes 46 verläuft. In die Bohrung 49 kann ein Kronenheber 50 mit einem Ende 51 geführt werden. Das Ende 51 ist als freies Ende an das Verlängerungsstück 52 angeformt. Am anderen Ende des Verlängerungsstückes 52 geht das Verlängerungsstück 52 in einen Griff 53 über. Das Verlängerungsstück 52 weist einen Abschnitt 54 auf, der gegenüber dem übrigen Verlängerungsstück 52 und dem Griff 53 abgewinkelt ist. Das Ende 51 ist mondsichelförmig ausgebildet und so ausgeformt, daß es leicht mit der Spitze am Zahnstumpf 46 zur Anlage gebracht werden kann. Wird der Kronenheber 50 in Pfeilrichtung 55 verschwenkt, so drückt die Unterseite des mondsichelförmig ausgestalteten Endes 51 auf eine Flanke 56 der Bohrung 49. Auf die Krone 47 wirkt eine Kraft, die den Haltekräften der Krone 47 am Zahnstumpf 46 entgegenwirkt. Mit mehreren unterschiedlichen Schwenkbewegungen in der Pfeilrichtung 55 kann die Krone 47 von dem Zahnstumpf 47 gelöst werden.

Fig. 6 zeigt einen Kronenheber 60, an dessen Griff 61 ein Verlängerungsstück 62 angeformt ist, das in ein Endstück 63 mündet. Das plattenförmige Endstück 63 ist zur Stirnseite hin teilweise rechteckförmig und verjüngt sich trapez- oder kegelstumpfförmig zum Verlängerungsstück 62 hin. Der Kronenheber 60 wird bevorzugt im Backenzahnbereich eingesetzt. Die Verjüngung am Endstück 63 gewährleistet, daß bei einer Drehbewegung der Kronenheber 60 im Bereich des Durchbruchs einer Krone nahezu drehmomentenfrei gedreht werden kann.

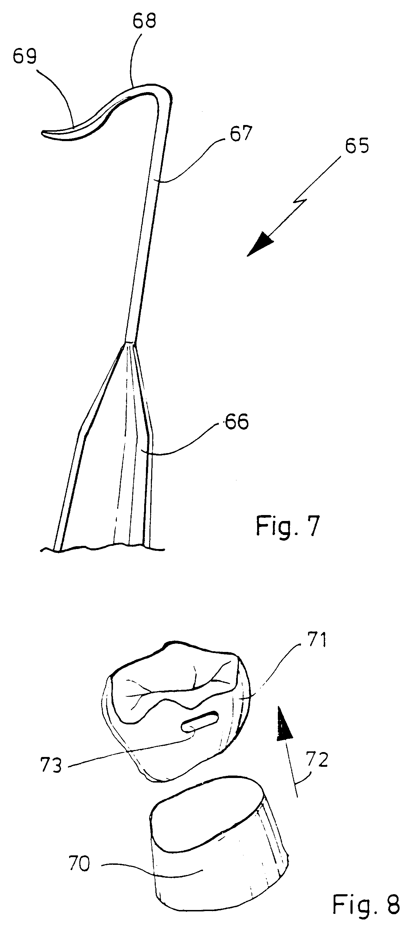

In Fig. 7 ist ein weiterer Kronenheber 65 gezeigt, der von einem Griff 66 ausgehend in ein erstes Verlängerungsstück 67 übergeht, an das sich ein zweites Verlängerungsstück 68 anschließt. Das zweite Verlängerungsstück 68 ist gegenüber dem ersten Verlängerungsstück 67 abgewinkelt. Das zweite Verlängerungsstück 68 geht in ein Endstück 69 über, das in der Figur mondsichelförmig ausgestaltet ist und sich zum freien Ende hin verjüngt. Der Kronenheber 65 wird bevorzugt zum Abheben von Kronen im Schneidezahnbereich eingesetzt, indem er in entsprechende Bohrungen auf der Schneidezahninnenseite, palatinal oder lingual, eingeführt und entsprechend verschwenkt wird.

In Fig. 8 ist ein Zahnstumpf 70 gezeigt, von dem eine Krone 71 unter Verwendung eines erfindungsgemäßen Kronenhebers abgehoben wurde. Die Krone 71 wurde in Pfeilrichtung 32 von dem Zahnstumpf 70 abgezogen, indem in eine Bohrung 73 ein Kronenheber, beispielsweise der in der Fig. 6 gezeigte Kronenheber, eingeführt wurde. Der Kronenheber wurde in der Bohrung 73 so lange verdreht und verschwenkt bis sich die Krone 71 vollkommen vom Zahnstumpf 70 abgelöst hat und danach vom Zahnstumpf 70 abgezogen werden kann.

## Patentansprüche

1. Instrument zum Entfernen von mit dem Zahnstumpf (2; 27; 46; 70) verbundenem Zahnersatz (18; 19; 20; 26; 47; 71), mit einem Griff (34; 61;) und einem an einem Ende des Griffes (34; 61;) angeformten Verlängerungsstück (35; 62;), das ein Endstück (36; 63;) aufweist, das im Anwendungsfall in einen Durchbruch (21, 22, 23; 29; 73) eines Zahnersatzes (18, 19, 20; 26; 71) eingeführt ist, wobei das Endstück (36; 63;) eine am Zahnstumpf (2; 27; 70) abstützbare Kante (38; 41) und einen Flächenabschnitt aufweist, der im Bereich des Durchbruches (21, 22, 23; 29; 73) an Flächen des Zahnersatzes (18; 19; 20; 26; 71) zur Anlage bringbar ist, dadurch gekennzeichnet, daß das Endstück (36; 63;) als rechteckförmige Platte ausgebildet ist und bevorzugt sich zum Verlängerungsstück (35; 62;) hin verjüngt.

2. Instrument zum Entfernen von mit dem Zahnstumpf (2; 27; 46; 70) verbundenem Zahnersatz (18; 19; 20; 26; 47; 71), mit einem Griff (53; 66) und einem an einem Ende des Griffes (53; 66) angeformten Verlängerungsstück (52; 67), das ein Endstück (51; 69) aufweist, das im Anwendungsfall in einen Durchbruch (21, 22, 23; 29; 49; 73) eines Zahnersatzes (18, 19, 20; 26; 47; 71) eingeführt ist, wobei das Endstück (51; 69) eine am Zahnstumpf (2; 27; 46; 70) abstützbare Kante und einen Flächenabschnitt aufweist, der im Bereich des Durchbruches (21, 22, 23; 29; 49; 73) an Flächen des Zahnersatzes (18; 19; 20; 26; 47; 71) zur Anlage bringbar ist, dadurch gekennzeichnet, daß das Endstück (51; 69) mondsichelförmig ausgebildet ist.

3. Instrument nach Anspruch 2, dadurch gekennzeichnet, daß das Endstück (51; 69) in einen Abschnitt (54; 68) des Verlängerungsstückes (52; 67) übergeht, der gegenüber dem übrigen Verlängerungsstück (52; 67) und dem Griff (53; 66) abgewinkelt ist.

## Claims

1. Instrument for the removal of a denture (18; 19; 20; 26; 47; 71), bound to the tooth stump (2; 27; 46; 70) with a handle (34; 61) and an extension member (35; 62) formed on one end of the handle (34; 61), the extention member (35; 62) exhibiting an end member (36; 63) which in use, is introduced into an opening (21; 22; 23; 29; 73) of a denture (18; 19; 20; 26; 71), whereby the end member (36; 63) exhibits an edge (38; 41) which is supportable on a tooth stump (2; 27; 70) and an areal section which can be seated, in the vicinity of the opening (21; 22; 23; 29; 73), on surfaces of the denture (18; 19; 20; 26; 71), characterized in that the end member (36; 63) is configured as rectangular shaped plate and, preferentially, is tapered in the direction of the extension member (35; 62)

2. Instrument for the removal of a denture (18; 19; 20; 26; 47; 71) bound to a tooth stump (2; 27; 46; 70), with a handle (53; 66) and an extension member (52; 67) formed on an end of the handle (53; 66), the extension member (52; 67) exhibiting an end member (51; 69) which, in use, is introduced into an opening (21; 22; 23; 29; 49; 73) of a denture (18; 19; 20; 26; 47; 71), whereby the end member (51; 69) exhibits an edge which is supportable on a tooth stump (2; 27; 46; 70) and an areal section which can be seated in the vicinity of the opening (21; 22; 23; 29; 49; 73) on surfaces of the denture (18; 19; 20; 26; 47; 71), characterized in that the end member (51; 69) is configured in the shape of a rounded sickle.

3. Instrument according to claim 2 characterized in that the end member (51; 69) merges into a section (54; 68) of the extension member (52; 67) which is at an angle with respect to the rest of the extension member (52; 67) and to the handle (53; 66).

## Revendications

1. Instrument d'enlèvement de prothèse dentaire (18; 19; 20; 26; 47; 71) reliée au moignon de dent (2; 27; 46; 70), comportant une prise (34; 61) et une pièce de prolongement (35; 62) qui est adaptée à une extrémité de la prise (34; 61) et qui présente une pièce d'extrémité (36; 63) qui, en cas d'application, est introduite dans une ouverture (21, 22, 23; 29; 73) d'une prothèse dentaire (18, 19, 20; 26; 71), la pièce d'extrémité (36; 63) présentant un bord (38; 41) qui peut être appuyé sur le moignon de dent (2; 27; 70) et une section de surface qui, dans la zone de l'ouverture (21, 22, 23; 29; 73), peut être amenée en appui sur des surfaces de la prothèse dentaire (18; 19; 20; 26; 71), caractérisé en ce que la pièce d'extrémité (36; 63) est réalisée sous la forme d'une plaque rectangulaire et en ce que de préférence elle s'amincit en direction de la pièce de prolongement (35; 62).

2. Instrument d'enlèvement de prothèse dentaire (18; 19; 20; 26; 47; 71) reliée au moignon de dent (2; 27; 46; 70), comportant une prise (53; 66) et une pièce de prolongement (52; 67) qui est adaptée à une extrémité de la prise (53; 66) et qui présente une pièce d'extrémité (51; 69) qui, en cas d'application, est introduite dans une ouverture (21, 22, 23; 29; 49; 73) d'une prothèse dentaire (18, 19, 20; 26; 47; 71), la pièce d'extrémité (51; 69) présentant un bord qui peut être appuyé sur le moignon de dent (2; 27; 46; 70) et une section de surface qui, dans la zone de l'ouverture (21, 22, 23; 29; 49; 73), peut être amenée en appui sur des surfaces de la prothèse dentaire (18; 19; 20; 26; 47; 71), caractérisé en ce que la pièce d'extrémité (51; 69) est réalisée sous la forme d'un croissant de lune.

3. Instrument suivant la revendication 2, caractérisé en ce que la pièce d'extrémité (51; 69) se transforme en un tronçon (54; 68) de la pièce de prolongement qui est coudé par rapport au reste de la pièce de prolongement (52; 67) et à la prise (53; 66).
